# EUROPÄISCHE PATENTSCHRIFT

(11) **EP 0 693 646 B1**
(45) Veröffentlichungstag und Bekanntmachung des Hinweises auf die Patenterteilung: **26.01.2000**
(21) Anmeldenummer: 94109866.7
(22) Anmeldetag: 26.06.1994
(51) Int. Cl.: F16K 31/18, F16K 31/08

(54) **Schaltgerät mit pneumatischem Reedschalter**
Switching device with pneumatic reed switch
Dispositif de commutation à commutateur à lame pneumatique

(43) Veröffentlichungstag der Anmeldung: 24.01.1996
(73) Patentinhaber: Weka AG, CH-8344 Bäretswil (CH)
(72) Erfinder: Gebauer, Heinz, CH-8606 Werrikon-Nänikon (CH)
(74) Vertreter: Blum, Rudolf Emil Ernst

(56) Entgegenhaltungen:
- DE-A- 2 349 969
- DE-U- 7 427 261
- DE-U- 9 011 336
- US-A- 4 114 852

## Beschreibung

Die vorliegende Erfindung betrifft ein Schaltgerät gemäß Oberbegriff des Anspruchs 1 mit einem pneumatischen, Kontaktzungen enthaltenden Reedschalter zur Ueberwachung eines Pegelstandes, welcher Reedschalter durch das Feld eines an einem Schwimmer angeordneten Schaltmagneten betätigbar ist, der entlang einem bei einer Seite des Reedschalters verlaufenden Weg vorbeibewegbar ist.

Der Betriebsdruck der Reedschalter und demgemäss von damit ausgerüsteten Schaltgeräten ist äusserst klein, so dass sie praktisch unmittelbar neben einem damit gesteuerten Apparat, sei dieser eine Anzeigevorrichtung oder eine Signalübertragungsvorrichtung, angeordnet werden müssten, und überdies sind solche Schaltgeräte derart ausgebildet, dass ein Auslenken der Kontaktzungen nur so lange dauert, wie der Schaltmagnet unmittelbar neben dem Reedschalter angeordnet ist, so dass, nachdem sich der Schaltmagnet vom Reedschalter entfernt hat, die Kontaktzungen in ihre Ursprungsstellung, d.h. Ruhestellung zurückschwenken.

Die US-A-4 114 852 offenbart einen Reedschalter mit einer Kontaktzunge, die entweder bei Magnetisierung durch einen stationären Elektromagneten oder bei Magnetisierung durch einen am Schalter vorbeibewegten Permanentmagneten geschaltet wird. Jedoch ist kein zusätzlicher Permanentmagnet vorhanden, mittels welchem die Kontaktzunge in einer jeweiligen Schaltstellung gehalten wird. Folglich weist die Kontaktzunge nur eine stabile Stellung auf, ist also nicht bistabil. Weiter sind keine Vorkehrungen zur Entlüftung vorhanden.

Hier will die Erfindung Abhilfe schaffen. Das Schaltgerät, wie es im Anspruch 1 gekennzeichnet ist, enthält einen neben dem Reedschalter und bei der vom Bewegungsweg des Schaltmagneten abgekehrten Seite des Reedschalters angeordneten Haltemagneten und enthält weiter eine dem Reedschalter zugeordnete Druckänderungsvorrichtung.

Die durch die Erfindung erreichten Vorteile ist, dass ein äusserst kompaktes pneumatisches Schaltgerät vorliegt, das unmittelbar an pneumatischen Uebertragungsleitungen, d.h. Rohre und Schläuche anschliessbar ist, in denen ein Betriebsdruck vorhanden ist, der hinsichtlich Druckabfall lange Uebertragungsleitungen zulässt, wobei das Schaltgerät ein bistabiles Schaltgerät ist.

Im folgenden wird der Erfindungsgegenstand anhand der lediglich einen Ausführungsweg zeigenden Zeichnungen beispielsweise näher erläutert.
Figur 1 zeigt schematisch den apparatetechnischen Aufbau des Schaltgerätes,
Figur 2 zeigt die Steuerschaltung des Schaltgerätes,
Figur 3 zeigt schematisch den Reedschalter mit dem Schaltmagneten und den Haltemagneten in einer ersten Arbeitsstellung, und
Figur 4 zeigt schematisch den Reedschalter mit dem Schaltmagneten in einer zweiten Arbeitsstellung.

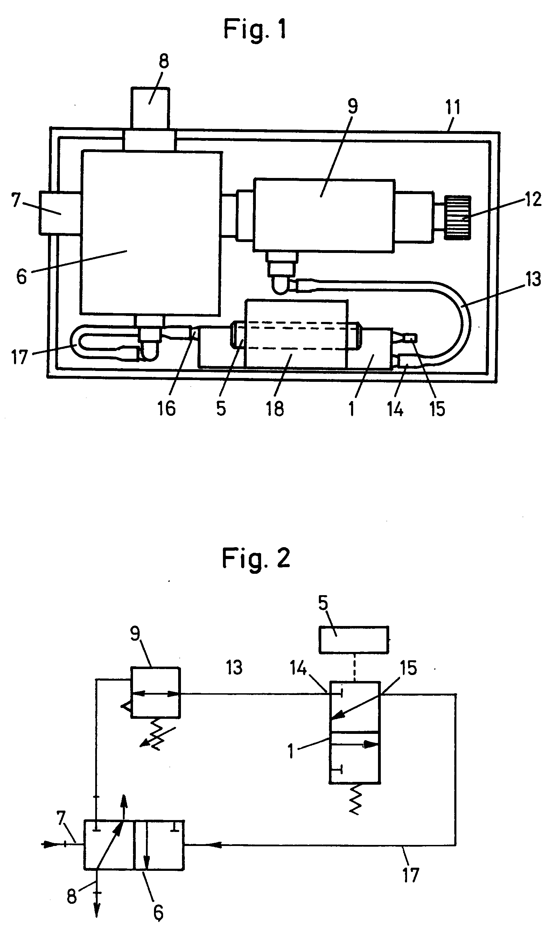

Das Schaltgerät, dessen Gehäuse in der Figur 1 mit der Bezugsziffer 11 bezeichnet ist, weist einen Einlassanschluss 7 und einen Auslassanschluss 8 für die Druckluft zum Anschluss an pneumatische Apparateteile, z.B. Anzeigen, Betriebssteuergeräte, etc. auf. Der Betriebsdruckbereich an diesen Anschlüssen liegt beispielsweise im Bereich von 3-6 bar, also beträchtlich höher als die Betriebsdruckbereiche für Reedschalter.

Der Einlassanschluss 7 ist an einem nachfolgend noch zu erläuternden Druckverstärker 6 angeordnet. Der Strömungsweg verläuft durch den Druckverstärker 6 direkt ohne Druckänderung und zu einen dem Druckverstärker 6 unmittelbar nachgeschalteten Druckregler 9. In diesem erfolgt eine Druckabsenkung, wobei die Sekundärluft einen Druck von z.B. 1/3 des Druckes der Primärluft aufweist. Der Druckabfall im Druckregler 9 lässt sich durch den Rändelknopf 12 einstellen. Der Druckregler 9 und auch der Druckverstärker 6 sind handelsübliche Produkte und müssen folglich nicht detailliert beschrieben werden. Der Auslass des Druckreglers 9 ist über eine Schlauchleitung 13 mit dem Eingang 14 eines Reedschalters 1 verbunden, der einen Entlüftungsstutzen 15 und einen Ausgang 16 aufweist. Der Ausgang des Reedschalters 1 steht über eine weitere Schlauchleitung 17 mit dem Verstärker 6 in Verbindung, der seinerseits mit dem Austrittsanschluss 8 in Verbindung steht.

In der Aufsicht nach Figur 1 ist über dem Reedschalter 1 ein in einem Trägerblock 18 gelagerter Haltemagnet 5 angeordnet.

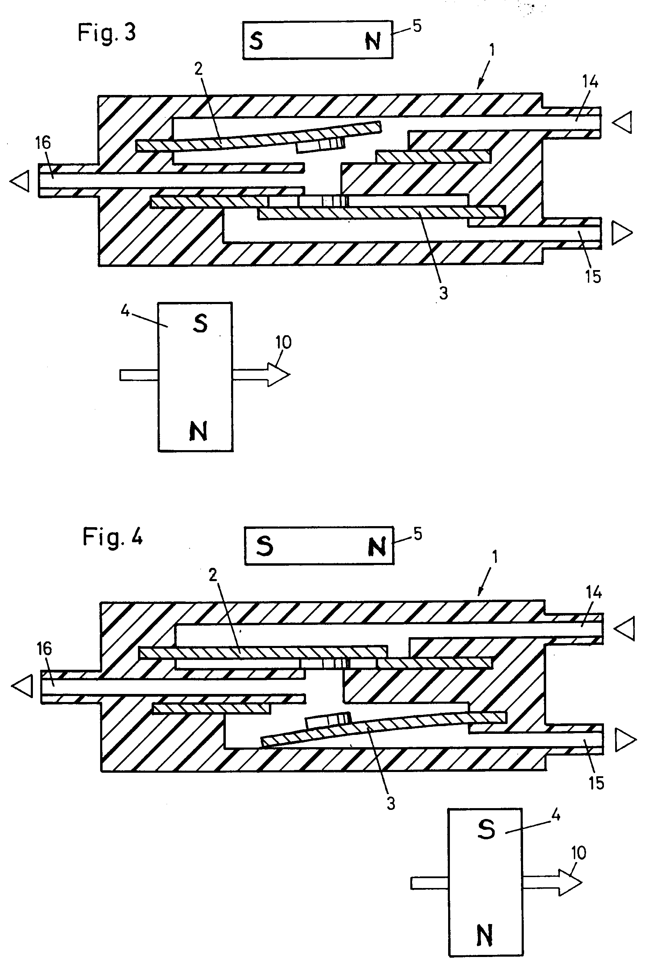

Es wird auf die Figuren 3 und 4 verwiesen. Der Reedschalter 1 weist eine Steuerluft-Kontaktzunge 2 und eine Entlüftungs-Kontaktzunge 3 auf. Neben dem Reedschalter 1 ist bei der Seite der Steuerluft-Kontaktzunge 2 der Haltemagnet 5 in der Stellung der gezeigten, durch "S" und "N" angegebenen, Polarität angeordnet. Auf der entgegengesetzten Seite des Reedschalters 1 verläuft der mit dem Pfeil 10 angezeigte Weg des Schaltmagneten 4, dessen Stellung bezüglich der Polarität ebenfalls durch "S" und "N" gezeigt ist.

Es ist ersichtlich, dass die Nord-Süd-Richtung der Polarität des Haltemagneten 5 senkrecht zur Nord-Süd-Richtung der Polarität des Schaltungsmagneten 4 und parallel zum Bewegungsweg 10 desselben verläuft.

Die Feldstärke des Schaltmagneten 4 beträgt, wie allgemein für solche Reedschalter bekannt, etwa 1,8 - 2,0 dTesla. Hingegen beträgt die Feldstärke des Haltemagneten grob lediglich maximal 1/10 der Feldstärke des Schaltmagneten, z.B. 0,12 bis 0,16 dTesla.

Die Funktionsweise des Reedschalters 1 ist wie folgt. Man nehme an, er sei in einer Ruhestellung nach Figur 3, so dass bei geöffneter Steuerluft-Kontaktzunge 2 der Eingang 14 für die Steuerluft mit dem Ausgang 16 kommuniziert. Die Entlüftungs-Kontaktzunge 3 ist in der gezeigten Schliessstellung.

Bewegt sich nun der Schaltmagnet 4 in Richtung des Pfeiles 10, kommen die Kontaktzungen 2,3 in den Einflussbereich seines Magnetfeldes (das viel stärker als das Magnetfeld des Haltemagneten ist), werden magnetisiert und in der Zeichnung nach unten gezogen, so dass sie die Stellung nach Figur 4 einnehmen, also der Steuerluftaustritt gesperrt und die Entlüftung offen ist.

Bei den bis jetzt bekannten Reedschalter-Anordnungen würden nun die Kontaktzungen aufgrund ihrer vorspannenden Federkraft wieder in die Stellung nach Figur 3 zurückkehren, wenn sich der Schaltmagnet 4, wie in Figur 4 dargestellt ist, wieder von den Kontaktzungen 2,3 entfernt, d.h. diese sich nicht mehr in den Einflussbereich des Magnetfeldes des Schaltmaneten 4 befinden.

Die Kontaktzungen 2,3 befinden sich jedoch im Einflussbereich des Magnetfeldes des Haltemagneten 5 und bleiben, wohl etwas schwächer als vorher, immer noch magnetisiert und verharren nun aufgrund des Einflusses des Haltemagneten 5 in der Stellung nach Figur 4. Damit ist das letztendliche Signal, das vom Schaltgerät ausgeht ein Dauersignal und das Schaltgerät folglich ein bistabiles Schaltgerät.

Bewegt sich der Schaltmagnet von in der Figur 4 rechts kommend entgegen der Richtung des Pfeiles 4 am Reedschalter 1 mit den gezeigten Stellungen der Kontaktzungen 2 und 3 vorbei, sind die Polaritäten im Vergleich mit der Figur 3 vertauscht und damit werden sich durch das Magnetfeld des Schaltmagenten 4 die Kontaktzunge 2 in die Offenstellung und die Kontaktzunge 3 in die Schliessstellung bewegen.

## Patentansprüche

1. Schaltgerät mit einem pneumatischen, Kontaktzungen (2, 3) enthaltenden Reedschalter (1) zur Ueberwachung eines Pegelstandes, welcher Reedschalter (1) durch das Feld eines an einem Schwimmer angeordneten Schaltmagneten (4) betätigbar ist, der entlang einem bei einer Seite des Reedschalters (1) verlaufenden Weg (10) vorbeibewegbar ist, welcher Reedschalter (1) einen Eintritt (14) für Druckluft, einen Auslass (16) für Druckluft und einen Entlüftungsstutzen (15), sowie eine Steuerluftkontaktzunge (2) und eine Entlüftungskontaktzunge (3) aufweist, wobei in einer ersten stabilen Schaltposition die Steuerluftkontaktzunge (2) die Verbindung zwischen dem Eintritt (14) und dem Auslass (16) ermöglicht, und die Entlüftungskontaktzunge (3) die Verbindung zwischen dem Eintritt (14) und dem Entlüftungsstutzen (15) sperrt, und in einer zweiten stabilen Schaltposition die Steuerluftkontaktzunge (2) die Verbindung zwischen dem Eintritt (14) und dem Auslass (16) sperrt, und die Entlüftungskontaktzunge (3) die Verbindung zwischen dem Eintritt (14) und dem Entlüftungsstutzen (15) ermöglicht, dadurch gekennzeichnet, dass neben einer zweiten, entgegengesetzt zur ersten Seite liegenden Seite des Reedschalters (1) ein Haltemagnet (5) mit einem Magnetfeld mit einer auf die Kontaktzungen (2, 3) einwirkenden Feldstärke angeordnet ist, die kleiner als die auf die Kontaktzungen (2, 3) jeweils einwirkenden Feldstärke des Magnetfeldes des Schaltmagneten (4) ist, und dass der Reedschalter (1) über eine pneumatische Druckänderungsvorrichtung (6, 9) mit einem pneumatischen Einlassanschluss (7) bzw. Austrittsanschluss (8) des Schaltgerätes verbunden ist.

2. Schaltgerät nach Anspruch 1, dadurch gekennzeichnet, dass die Druckänderungsvorrichtung (6,7) einen mit dem Austrittsanschluss (8) und mit dem Reedschalter (1) in Verbindung stehenden Druckverstärker (6) und einem mit dem Einlassanschluss (7) und dem Reedschalter in Verbindung stehenden, druckvermindernden Druckregler (9) enthält.

3. Schaltgerät nach einem der vorangehenden Ansprüche, dadurch gekennzeichnet, dass die Feldstärke des Haltemagneten (5) maximal 1/10 der Feldstärke des Schaltmagneten (4) beträgt.

4. Schaltgerät nach einem der vorangehenden Ansprüchen, dadurch gekennzeichnet, dass die Nord-Südpol-Richtung des Schaltmagneten mindestens annähernd senkrecht zur Nord-Südpol-Richtung des Haltemagneten verläuft, so dass aufgrund der gebildeten Magnetfelder die Richtung der Schwenkbewegung der Kontaktzungenenden aufgrund der vorhandenen Polaritäten von der Bewegungsrichtung des Schaltmagneten bestimmt ist.

5. Schaltgerät nach einem der vorangehenden Ansprüche, dadurch gekennzeichnet, dass die Nord-Südpol-Richtung des Haltemagneten mindestens annähernd parallel zum Bewegungsweg des Schaltmagneten verläuft.

## Claims

1. Switching device with a pneumatic reed switch (1) having contact tongues (2, 3) for a controlling of a liquid level, which reed switch (1)is adapted to be operated by the field of a switching magnet (4) mounted to a float which is moveable along a path (10) extending at one side of the reed switch (1), which reed switch (1) includes an inlet (14) for pressurized air, an outlet (16) for pressurized air and a venting stub (15), and a control air contact tongue (2) and a venting contact tongue (3), as well, whereby in a first stable switching position the control air contact tongue (2) allows the communication between the inlet (14) and the outlet (16), and the venting contact tongue (3) blocks the communication between the inlet (14) and the venting stub (15), and in a second stable switching position the control air contact tongue (2) blocks the communication between the inlet (14) and the outlet (16), and the venting contact tongue (3) allows the communication between the inlet (14) and the venting stub (15), characterised in that a holding magnet (5) having a magnetic field with a field intensity acting onto the contact tongues (2, 3) is located at a second side of the reed switch (1) opposite of the first side of the reed switch (1), which field intensity is lower than the field intensity of the magnetic field of the switching magnet (4) acting onto the respective contact tongues, and in that the reed switch (1) is connected via a pneumatic pressure changing device (6, 9) to a pneumatic inlet connection (7) and outlet connection (8), respectively of the switching device.

2. Switching device according to claim 1, characterised in that the pressure changing device (6, 7) comprises a pressure amplifier (6) communicating with the outlet connection (8) and with the reed switch (1), and a pressure reducing pressure controller (9) communicating with the inlet connection (7) and the reed switch.

3. Switching device according to one of the preceding claims, characterised in that the field intensity of the holding magnet (5) amounts to ¹/₁₀ of the field intensity of the switching magnet (4).

4. Switching device according to one of the preceding claims, characterised in that the North-Southpole direction of the switching magnet extends at least approximately perpendicular to the North-Southpole direction of the holding magnet, so that due to the magnetic fields produced the direction of the pivoting movement of the contact tongues due to the polarities present is set by the direction of movement of the switching magnet.

5. Switching device according to one of the preceding claims, characterised in that the North-Southpole direction of the holding magnet extends at least approximately parallel to the path of movement of the switching magnet.

## Revendications

1. Appareil de commutation avec un commutateur à lames (1) comportant des lames de contact (2, 3) pour la surveillance d'un niveau, le commutateur à lames (1) étant agencé pour être commandé par le champs d'un aimant de commande (4) porté par un flotteur se mouvant d'un coté du commutateur à lames (1) le long d'une trajectoire (10), le commutateur à lames (1) comportant une entrée (14) d'air comprimé, une sortie d'air comprimé (16) et un bec (15) de vidange d'air comprimé, ainsi qu'une première lame de contact (2) pour l'air de commande et une seconde lame de contact (3) pour la vidange de l'air, la première lame (2) laissant en une première position de commande stable un passage entre l'entrée (14) et la sortie (16) tandis que la seconde lame (3) bloque le passage entre l'entrée (14) et le bec de vidange (15), alors qu'en une seconde position de commande stable la première lame (2) bloque le passage ente l'entrée (14) et la sortie (16) tandis que la seconde lame (3) laisse un passage entre l'entrée (14) et le bec de vidange (15), caractérisé en ce qu'un aimant de rappel (5) produisant un champs magnétique agissant plus faiblement sur les lames de contact (2, 3) que le champs magnétique de l'aimant de commande (4) est disposé sur le coté opposé du commutateur à lames (1), et en ce que celui-ci communique par l'intermédiaire d'un modificateur de pression (6, 9) avec une entrée pneumatique (7) respectivement une sortie pneumatique (8) de l'appareil de commutation.

2. Appareil de commutation selon la revendication 1, caractérisé en ce que le modificateur de pression (6, 7) comporte un amplificateur de pression (6) communiquant avec la sortie pneumatique (8) et avec le commutateur à lames (1), ainsi qu'un régulateur de pression (9) réduisant la pression et communiquant avec l'entrée pneumatique (7) ainsi qu'avec le commutateur à lames.

3. Appareil de commutation selon une des revendications précédentes, caractérisé en ce que la force du champs de l'aimant de rappel (5) n'excède pas 1/10 de la force du champs de l'aimant de commande (4).

4. Appareil de commutation selon une des revendications précédentes, caractérisé en ce que l'axe nord-sud de l'aimant de commande est au moins approximativement perpendiculaire à l'axe nord-sud de l'aimant de rappel, de manière à ce qu'en fonction des champs magnétiques l'orientation du mouvement de bascule des extrémités des lames de contact soit déterminée en fonction des polarités par la direction du mouvement de l'aimant de commande.

5. Appareil de commutation selon une des revendications précédentes, caractérisé en ce que l'axe nord-sud de l'aimant de rappel est au moins approximativement parallèle à la trajectoire de l'aimant de commande.
